(19) Europäisches Patentamt
European Patent Office
Office européen des brevets

(11) **EP 4 730 725 A1**

(12) **EUROPEAN PATENT APPLICATION**
published in accordance with Art. 153(4) EPC

(43) Date of publication:
**22.04.2026 Bulletin 2026/17**

(21) Application number: **23941698.5**

(22) Date of filing: **14.06.2023**

(51) International Patent Classification (IPC):
***H04L 27/26*** (2006.01)   ***H04L 7/04*** (2006.01)

(52) Cooperative Patent Classification (CPC):
**H04L 7/04; H04L 27/26**

(86) International application number:
**PCT/KR2023/008186**

(87) International publication number:
**WO 2024/257915 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ettifos Co.**
**Seongnam-si, Gyeonggi-do 13503 (KR)**

(72) Inventors:
• **OH, Jong Gyu**
  **Yongin-si, Gyeonggi-do 16843 (KR)**

• **LEE, Kang Min**
  **Yongin-si, Gyeonggi-do 16908 (KR)**
• **KWAK, Ki Young**
  **Hanam-si, Gyeonggi-do 12904 (KR)**
• **NAM, Chang Hyun**
  **Seongnam-si, Gyeonggi-do 13599 (KR)**
• **KIM, Tae Gon**
  **Seongnam-si, Gyeonggi-do 13559 (KR)**

(74) Representative: **Murgitroyd & Company**
**165-169 Scotland Street**
**Glasgow G5 8PL (GB)**

(54) **METHOD AND APPARATUS FOR RECEIVING CONTROL CHANNEL**

(57)     A method for receiving a control channel in a sidelink is presented. The method may comprise the steps of: using a first index from among a plurality of candidate orthogonal indexes so as to generate a reference signal for a control channel; performing a differential correlation calculation for the correlation between the reference signal for the received candidate control channel and the generated reference signal; applying phase rotation or phase correction to the result of the differential correlation calculation so as to detect a minimum phase value and an orthogonal index corresponding to the minimum phase value; and using the minimum phase value and a normalized power value acquired on the basis of the differential correlation calculation, so as to determine whether presence detection of a control channel is successful or the orthogonal index used for the control channel.

FIG. 4

## Description

### TECHNICAL FIELD

The present disclosure relates to a wireless communication technology, and more particularly, to a method and apparatus for receiving a control channel.

### BACKGROUND

Sidelink refers to a communication method in which a direct link is established between terminals, allowing the terminals to exchange voice or data directly without the involvement of a base station. Sidelink is being considered as one possible method for alleviating the burden on base stations caused by rapidly increasing data traffic.

Vehicle-to-everything (V2X) refers to a communication technology in which a vehicle exchanges information with other vehicles, pedestrians, and infrastructure-equipped objects through wired or wireless communication. V2X may include vehicle-to-vehicle (V2V), vehicle-to-infrastructure (V2I), vehicle-to-network (V2N), and vehicle-to-pedestrian (V2P).

In the 5G communication standard, sidelink transmission is used for V2X, and in sidelink, control and data channels are also separated. However, compared to downlink transmission and reception between a terminal and a base station, sidelink is defined such that the index used by the other terminal to generate a sequence code is not known, and only candidate index values are provided, with the selection made by the transmitting side.

In addition, since sidelink is performed in an environment where both the transmitting and receiving sides are moving, timing errors may occur. Thus, the receiving side needs to be able to consider the timing errors.

### DISCLOSURE

### TECHNICAL PROBLEM

The present disclosure proposes a method or apparatus for receiving a control channel in sidelink.

It will be appreciated by people skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

In an aspect of the present disclosure, provided herein is a method for receiving a control channel in sidelink communication. The method includes: generating a reference signal for the control channel based on a first index among a plurality of candidate orthogonal indices; performing a differential correlation operation on correlation between a received reference signal for a candidate control channel and the generated reference signal; detecting a minimum phase value and an orthogonal index corresponding to the minimum phase value by applying phase rotation or phase compensation to a result of the differential correlation operation; and determining whether the control channel is successfully detected or an orthogonal index used for the control channel, based on the minimum phase value and a normalized power value obtained from the differential correlation operation.

In another aspect of the present disclosure, provided herein is an apparatus configured to receive a control channel in sidelink communication. The apparatus includes: a signal generator configured to generate a reference signal for the control channel based on a first index among a plurality of candidate orthogonal indices; a differential correlator configured to perform a differential correlation operation on correlation between a received reference signal for a candidate control channel and the generated reference signal; a phase rotator and compensator configured to detect a minimum phase value and an orthogonal index corresponding to the minimum phase value by applying phase rotation or phase compensation to a result of the differential correlation operation; and a determiner configured to determine whether the control channel is successfully detected or an orthogonal index used for the control channel, based on the minimum phase value and a normalized power value obtained from the differential correlation operation.

It will be understood by those skilled in the art that the above-described aspects of the present disclosure are merely part of various embodiments of the present disclosure, and various modifications and alternatives could be developed from the following technical features of the present disclosure.

### ADVANTAGEOUS EFFECTS

The present disclosure has the following effects.

It is possible to improve the performance of detecting reception of a sidelink control channel at a receiving device.

It is possible to detect reception of a sidelink control channel at a receiving device by reflecting a timing error that may occur in sidelink.

## BRIEF DESCRIPTION OF THE DRAWINGS

The accompanying drawings, included as part of the detailed description to aid in understanding the present disclosure, provide embodiments of the present disclosure and, together with the detailed description, illustrate the principle of the present disclosure.

FIG. 1 illustrates a vehicle-to-everything (V2X) communication environment.

FIG. 2 illustrates resource allocation in New Radio (NR) V2X.

FIG. 3 illustrates structures of control and data channels in NR V2X.

FIG. 4 illustrates a procedure for detecting a physical sidelink control channel (PSCCH) demodulation reference signals (DMRS).

FIG. 5 illustrates detailed structures of a correlator and a differential correlator.

FIG. 6 illustrates a detailed structure of a phase rotator and compensator.

FIGs. 7 to 9 illustrate simulation results showing phase values according to timing errors (offsets).

FIG. 10 illustrates a block diagram of a transmitting device and a receiving device.

FIG. 11 illustrates a block diagram of a processor of a receiving device.

FIG. 12 illustrates a flowchart of a control channel reception method.

FIGs. 13 to 16 illustrate simulation results related to control channel reception.

## DETAILED DESCRIPTION

Hereinafter, embodiments of the present disclosure will be described with reference to the accompanying drawings. However, the present disclosure is not limited to the embodiments described in this specification and may be implemented in various other forms. The terms used in this specification are intended to aid in the understanding of the embodiments and are not intended to limit the scope of the present disclosure. In addition, the singular forms used below may include plural forms unless the context clearly indicates otherwise.

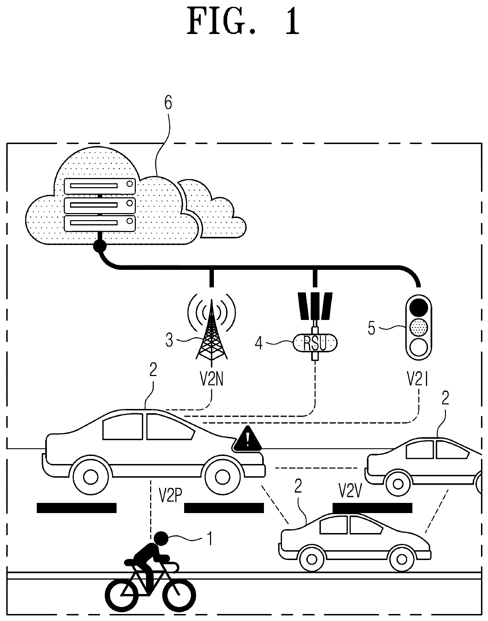

FIG. 1 illustrates a communication environment to which the present disclosure is applied.

Vehicle-to-everything (V2X) refers to a communication system including wireless communication between vehicles 2 (vehicle-to-vehicle (V2V)). V2V not only serves the basic role of informing surrounding vehicles of information such as the location, direction, and speed of a vehicle, but also plays a role in notifying potential risk factors such as sudden braking or lane changes.

In addition, V2X refers to a system in which a vehicle communicates and shares information with various elements on the road for autonomous driving, including wireless communication between the vehicle and a network 3 (vehicle-to-network (V2N)), wireless communication between the vehicle and a road side unit (RSU) 4, and wireless communication between the vehicle and traffic infrastructure 5 (vehicle-to-infrastructure (V2I)).

V2X may be used for communication between vehicles to share hazard information with each other, or for communication between vehicles and traffic infrastructure such as parking lots and traffic lights to check information such as parking locations and signal change times. It is considered an essential technology for achieving fully autonomous driving.

V2X is implemented through sidelink within the 5G communication standard. Vehicles, that is, transmitting and receiving sides transmit and receive information via sidelink.

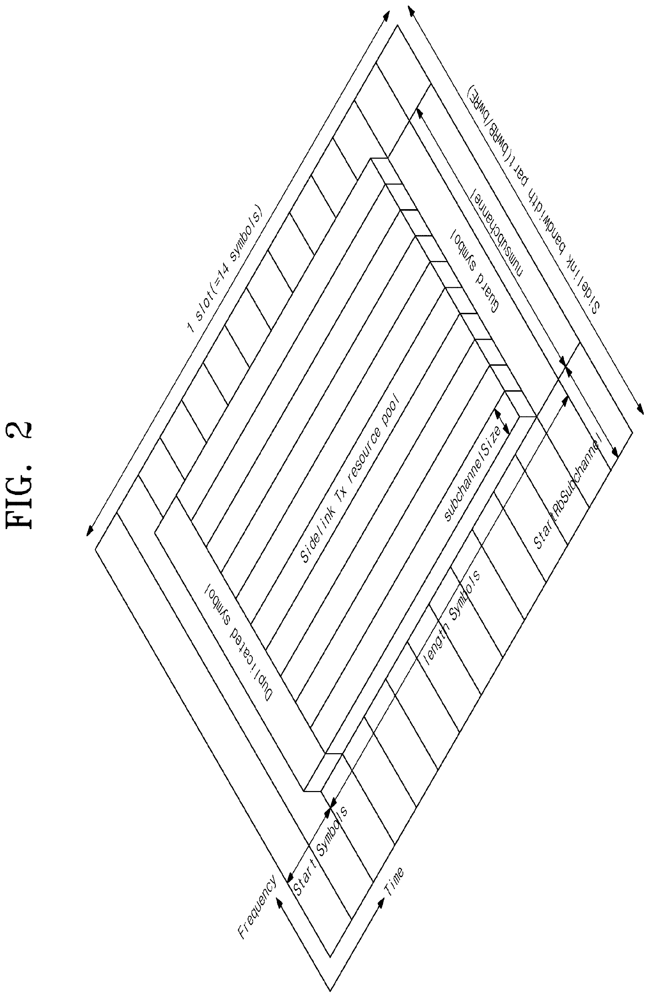

FIG. 2 illustrates resource allocation of NR sidelink (SL).

In NR V2X, only specific slots are configured (or preconfigured) to include SL transmission. Accordingly, available SL resources include slots (time resources) allocated for SL and common resource blocks (RBs) within an SL bandwidth part (BWP) (frequency resources). In NR V2X, a subset of available SL resources is configured (or preconfigured) to be used by some user equipments (UEs) for SL transmission thereof. Such a subset of available SL resources is referred to as a resource pool and is illustrated in FIG. 2. The common RBs within the resource pool are referred to as physical resource blocks (PRBs). The resource pool consists of consecutive PRBs and consecutive or non-consecutive slots that are configured (or preconfigured) for SL transmission. The resource pool should be defined within the SL BWP.

In the frequency domain, the resource pool is divided into a configured (or preconfigured) number of consecutive subchannels, denoted by numSubchannel, and each subchannel consists of a group of consecutive PRBs within a slot. The number of PRBs in a subchannel, subchannelSize, corresponds to the size of the subchannel, which is configured (or preconfigured) within the resource pool. In NR V2X SL, the subchannel size (subchannelSize) may be 10, 12, 15, 20, 25, 50, 75, or 100 PRBs. The subchannel represents the smallest unit for SL data transmission or reception. SL transmission may use one or more subchannels.

In the time domain, slots that are part of the resource pool are configured (or preconfigured) and occur with a periodicity of 10240 ms. The slots that are part of the resource pool may be configured (or preconfigured) by a bitmap, and the length of the bitmap may be 10, 11, 12, ..., or 160.

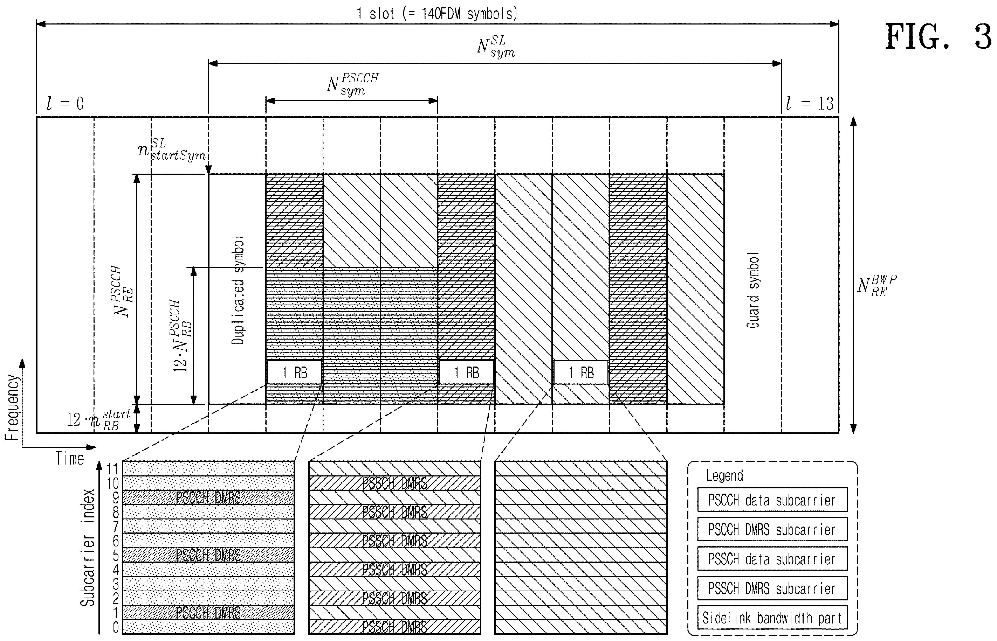

FIG. 3 illustrates the structures of control and data channels of NR SL.

In NR SL, a physical sidelink control channel (PSCCH) is used for transmitting control information between UEs, and a physical sidelink shared channel (PSSCH) is used for data transmission.

The PSCCH and PSSCH are multiplexed and transmitted as a pair within a slot. The PSCCH and PSSCH may be transmitted over one or more subchannels. That is, when the BWP consists of multiple subchannels, each subchannel corresponds to a candidate subchannel on which the PSCCH and PSSCH are transmitted.

The PSCCH is used to transmit 1st-stage sidelink control information (SCI), which is necessary for decoding the PSSCH that is multiplexed and transmitted as a pair. Accordingly, for successful decoding of the PSSCH, the PSCCH should first be successfully decoded. For the PSCCH, three demodulation reference signals (DMRSs) are transmitted per RB, and the receiving side should perform demodulation using the received DMRSs.

Regarding a PSCCH DMRS, the generation of a DMRS sequence defined in 3GPP TS 38.211, V17.1.0 below is referenced

[Equation 1]

8.4.1.3        Demodulation reference signals for PSCCH

8.4.1.3.1        Sequence generation

The sequence $r_l(m)$ shall be generated according to

$$r_l(m) = \frac{1}{\sqrt{2}}\big(1 - 2c(2m)\big) + j\frac{1}{\sqrt{2}}\big(1 - 2c(2m+1)\big)$$

where the pseudo-random sequence $c(m)$ is defined in clause 5.2.1. The pseudo-random sequence generator shall be initialized with

$$c_{\text{init}} = \big(2^{17}\big(N_{\text{symb}}^{\text{slot}}n_{\text{s,f}}^{\mu} + l + 1\big)(2N_{\text{ID}} + 1) + 2N_{\text{ID}}\big) \bmod 2^{31}$$

where

- $l$ is the OFDM symbol number within the slot,
- $n_{\text{s,f}}^{\mu}$ is the slot number within a frame, and
- $N_{\text{ID}} \in \{0,1,\dots,65535\}$ is given by the higher-layer parameter sl-DMRS-ScrambleID.

8.4.1.3.2        Mapping to physical resources

The sequence $r_l(m)$ shall be multiplied with the amplitude scaling factor $\beta_{\text{DMRS}}^{\text{PSCCH}}$ in order to conform to the transmit power specified in [5, 38.213] and mapped in sequence starting with $r_l(0)$ to resource elements $(k,l)_{p,\mu}$ in a slot on antenna port $p = 2000$ according to

$$a_{k,l}^{(p,\mu)} = \beta_{\text{DMRS}}^{\text{PSCCH}} w_{f,i}(k')r_i(3n + k')$$
$$k = nN_{\text{sc}}^{\text{RB}} + 4k' + 1$$
$$k' = 0,1,2$$
$$n = 0,1,\dots$$

where the following conditions are fulfilled

- they are within the resource elements constituting the PSCCH

The quantity $w_{f,i}(k')$ is given by Table 8.4.1.3.2-1 and $i \in \{0,1,2\}$ shall be randomly selected by the UE.

The reference point for $k$ is subcarrier 0 in common resource block 0.

The quantity $l$ is the OFDM symbol number within the slot.

**Table 8.4.1.3.2-1: The quantity $w_{f,i}(k')$.**

| $k'$ | $w_{f,i}(k')$ | | |
|---|---|---|---|
| | $i = 0$ | $i = 1$ | $i = 2$ |
| 0 | 1 | 1 | 1 |
| 1 | 1 | $e^{j2/3\pi}$ | $e^{-j2/3\pi}$ |
| 2 | 1 | $e^{-j2/3\pi}$ | $e^{j2/3\pi}$ |

As described above, three PSCCH DMRSs are generated within 1 RB and allocated to resources and transmitted (k' = 0, 1, 2). For each RB, the sequence is multiplied by $w_{f,i}$, which depends on orthogonal index i. Since the orthogonal index i is configured to be randomly selected by the transmitting side, the receiving side may not know the orthogonal index i of the received PSCCH DMRS. Therefore, the receiving side needs to determine the presence of the PSCCH in each subchannel for each receiving slot and detect the orthogonal index used in the transmitted PSCCH DMRS. In the prior art, detection is attempted by performing blind decoding for three orthogonal indices in every subchannel.

In addition, since V2X communication involves communication between UEs (e.g., vehicles or RSUs), some timing errors may occur. The receiving side needs to be able to robustly detect the presence of the PSCCH DMRS (or PSCCH) and the orthogonal index even in the presence of such timing errors.

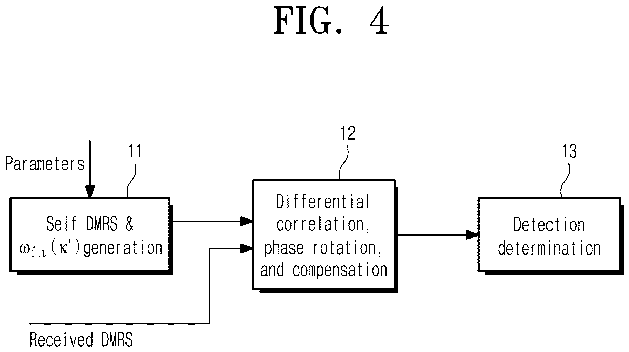

FIG. 4 illustrates a procedure for detecting a control channel (or control channel DMRS). This procedure is performed by the receiving side of the control channel (or control channel DMRS).

Self DMRS & $w_{f,i}$ generation 11 refers to generating signals according to a predefined signal generation method, for example, generating the PSCCH DMRS defined in the standard based on related parameters, and generating $w_{f,i}$ for candidate orthogonal index i.

Differential correlation, phase rotation, and compensation 12 refers to calculating correlation based on a candidate control channel DMRS received from the transmitting side, a control channel DMRS generated by the receiving side, and $w_{f,i}$, obtaining differential correlation, and applying phase rotation and compensation to the result. Here, the control channel DMRS received from the transmitting side is referred to as a candidate for the following reason. Until detection determination 13 is completed, it is not known whether the received DMRS is the control channel DMRS for the receiving side.

The detection determination 13 refers to determining whether there is a control channel (or control channel DMRS) by comparing a phase-rotated and compensated value with a reference value (threshold), and, if the control channel exists, identifying $w_{f,i}$ (or the orthogonal index i).

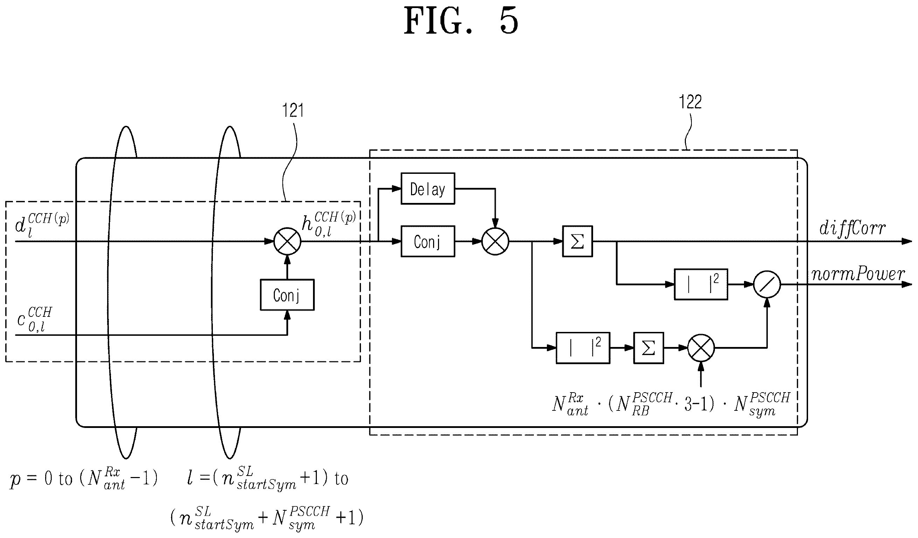

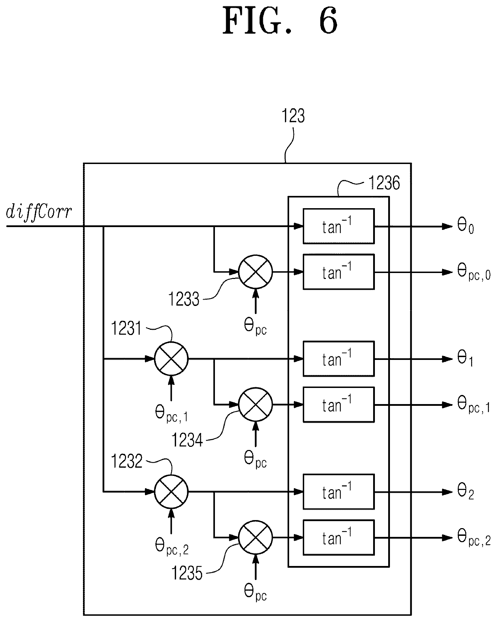

Hereinafter, the detailed description for detecting a control channel (or control channel DMRS) and detecting the orthogonal index of the control channel will be provided with reference to FIGs. 5 and 6.

FIG. 5 illustrates detailed functional blocks of differential correlation related to a control channel DMRS.

Referring to FIG. 5, differential correlation includes a correlator 121 for correlating a received control channel DMRS and a generated control channel DMRS and a DMRS differential correlator 122. As shown in FIG. 6, a differential correlation value (diffCorr), which is the output of the DMRS differential correlator 122, is input to a phase rotation and compensator 123.

The correlator (121) computes the correlation between the received control channel DMRS ( $d_l^{CCH(p)}$ ) and the control channel DMRS ( $c_{0,l}^{CCH}$ ) generated by the receiving side based on candidate orthogonal index i = 0. To this end, the receiving side needs to generate the control channel DMRS ( $c_{0,l}^{CCH}$ ) for candidate orthogonal index i = 0 as follows.

For candidate orthogonal index i = 0, the control channel (PSCCH) DMRS may be generated for each candidate receiving antenna port p as follows. Here, l denotes the OFDM symbol index within a slot where the control channel DMRS is mapped, j denotes the RB index for a control channel, $n_{startSym}^{SL}$ denotes the starting symbol index of a sidelink subchannel, $N_{sym}^{PSCCH}$ denotes the number of symbols allocated for a PSCCH, $n_{RB}^{start}$ denotes the starting RB index of an SL subchannel, $N_{RB}^{PSCCH}$ denotes the number of RBs allocated for a control channel, and k' is a constant with an integer value from 0 to 2 that indicates the frequency resource (subcarrier) index where the control channel DMRS is mapped.

[Equation 2]

$$for \ l = (n_{startSym}^{SL} + 1) \ to \ (n_{startSym}^{SL} + N_{sym}^{PSCCH} + 1)$$
$$for \ j = n_{RB}^{start} \ to \ (n_{RB}^{start} + N_{RB}^{PSCCH} - 1)$$
$$for \ k' = 0 \ to \ 2$$
$$c_{i,l}^{CCH}(3 \cdot j + k') = w_{f,0}(k') \ c'(3 \cdot j + k') = 1 \cdot c'(3 \cdot j + k') = c'(3 \cdot j + k')$$
$$end$$
$$end$$
$$end$$

In Equation 2, since $w_{f,O(k')}$ (i.e., the value of $w_{f,i}$ when i = 0) is 1, it is seen that it is replaced with 1.

In addition, referring to Equation 2, it is seen that $c_{i,l}^{CCH}$ is generated for each OFDM symbol l where the control channel DMRS is mapped and the number of generated control *PSCCH* channel DMRSs is $N_{RB}^{PSCCH} \cdot 3$ .

In Equation 2, c'(n) is defined based on a control channel DMRS sequence $r_l(m)$, where $c'(n) = \frac{1}{\sqrt{2}} [(1 - 2 \cdot c(2n) + j(1 - 2 \cdot c(2n+1)))]$ . In addition, c(n) corresponds to the pseudo-random sequence defined in 3GPP TS 38.211. For refer to the contents of 3GPP TS 38.211 mentioned earlier.

The computation of the correlation between the received control channel DMRS ( $d_l^{CCH(p)}$ ) and $c_{0,l}^{CCH}$ for orthogonal index 0 generated by the receiving side may be expressed as the product of $d_l^{CCH(p)}$ and the complex conjugate of $c_{0,l}^{CCH}$ . Specifically, it may be expressed as $h_{0,l}^{CCH(p)}$ .

[Equation 3]

$$for\ p = 0\ to\ (N_{ant}^{Rx} - 1)$$

$$for\ l = (n_{startSym}^{SL} + 1)\ to\ (n_{startSym}^{SL} + N_{sym}^{PSCCH})$$

$$for\ j = n_{RB}^{start}\ to\ (n_{RB}^{start} + N_{RB}^{PSCCH} - 1)$$

$$for\ k' = 0\ to\ 2$$

$$h_{0,l}^{CCH(p)}(3(j - n_{RB}^{start}) + k') = d_l^{CCH(p)}(12j + 4k' + 1) \cdot \{c_{0,l}^{CCH}(3j + k')\}^*;$$

$$end$$
$$end$$
$$end$$
$$end$$

In Equation 3, p is the antenna port index, and l, j, k' are the indices described above. In addition, $d_l^{CCH(p)}(q)$ denotes the received control channel DMRS at antenna port index = p, OFDM symbol index = l, and subcarrier index = q, $N_{ant}^{Rx}$ denotes the number of receiving antenna ports, and * denotes the complex conjugate operator.

Referring to Equation 3, it is seen that $h_{0,l}^{CCH(p)}$ is generated $N_{RB}^{PSCCH} \cdot 3$ times for each OFDM symbol l where the received control channel DMRS is mapped.

The result $h_{0,l}^{CCH(p)}$ of the correlator 121 is input to the differential correlator 122, which is used to obtain a first value (diffCorr), which is the accumulated result of the differential correlation of $h_{0,l}^{CCH(p)}$, and a second value (normPower), which is the normalized power value. The second value (normPower) is the result of dividing the power value of the accumulated differential correlation by a constant-multiplied value of the accumulated power values of each differential correlation value.

In addition, diffCorr, diffEnergy, and normPower may be calculated and obtained using $h_{0,l}^{CCH(p)}$ as follows.

[Equation 4]

$$diffCorr = Complex(0.0, 0.0);$$

$$diffEnergy = 0.0;$$

$$for\ p = 0\ to\ N_{ant}^{Rx} - 1$$

$$for\ l = (n_{startSym}^{SL} + 1)\ to\ (n_{startSym}^{SL} + N_{sym}^{PSCCH})$$

$$for\ m = 0\ to\ (N_{RB}^{PSCCH} \cdot 3 - 2)$$

$$diffCorr\ += h_{0,l}^{CCH(p)}(m) \cdot \{h_{0,l}^{CCH(p)}(m+1)\}^*;$$

$$diffEnergy\ += \left| h_{0,l}^{CCH(p)}(m) \cdot \{h_{0,l}^{CCH(p)}(m+1)\}^* \right|^2;$$

$$end$$

$$end$$

$$end$$

$$normPower = \frac{|diffCorr|^2}{\{N_{sym}^{PSCCH} \cdot N_{ant}^{Rx} \cdot (N_{RB}^{PSCCH} \cdot 3 - 1) \cdot diffEnergy\}}$$

As described above, $h_{0,l}^{CCH(p)}$ is generated $N_{RB}^{PSCCH} \cdot 3$ times for each OFDM symbol 1. Since Equation 4 is related to operations between the values, the number of operations is one smaller than the total number of values. Thus, m is configured as shown above, and $N_{RB}^{PSCCH} \cdot 3 \_ 1$ operations are performed.

The first value (diffCorr) corresponds to the result of the differential correlation operation for candidate orthogonal index i = 0. The operation of the first value (diffCorr) is the autocorrelation operation of $h_{0,l}^{CCH(p)}$ at consecutive resource locations (subcarriers) and the accumulated sum thereof. If the phase (angle) of the operation result is close to 0, there is a high possibility that the control channel DMRS ( $c_{0,l}^{CCH}$ ) generated at the corresponding orthogonal index, reception antenna port, and resource location is the same as the received signal ( $d_l^{CCH(p)}$ ).

In Equation 14 to be described below, the phase (angle) range for determining the similarity of two signals is set within an absolute value of $\pi/3$, but such a range is merely one example. The receiving side performs the similarity determination of the two signals for all candidates of orthogonal indices, receiving antenna ports, time resources (i.e., OFDM symbols), and frequency resources (i.e., subcarriers). However, in the case of candidate orthogonal indices, no control channel DMRS is generated for all candidate orthogonal indices, but phase differences preconfigured among candidate orthogonal indices are used, which will be described later.

Once the first value (diffCorr) is obtained, a phase value set of differential correlation values for multiple candidate orthogonal indices is obtained based on the first value as follows. As explained above, the receiving side generates the control channel DMRS for a specific candidate orthogonal index (i=0) and performs the correlation operation with the received control channel DMRS. However, the receiving end does not perform any operations for the remaining candidate orthogonal indices (i=1 and 2). Through the following process, the phase values for the differential correlation of the remaining candidate orthogonal indices may be obtained without generating the control channel DMRS for the remaining candidate orthogonal indices.

1) First process (acquisition of phase values of differential correlation for all candidate orthogonal indices)

Referring to Equation 1, orthogonal index i = 0 has a phase difference of 2/3 $\pi$ with orthogonal index i = 1 and a phase difference of -2/3 $\pi$ with orthogonal index i = 2.

Accordingly, the differential correlation value for orthogonal index i = 1 may have a phase difference of 2/3 $\pi$ from the differential correlation value for orthogonal index i = 0, and the differential correlation value for orthogonal index i = 2 may have a phase difference of - 2/3 $\pi$ from the differential correlation value for orthogonal index i = 0.

Accordingly, as illustrated in FIG. 6, $\theta_0$, $\theta_1$, and $\theta_2$ may be obtained as follows: $\theta_0$ represents the phase value of the differential correlation between the received control channel DMRS and the control channel for candidate orthogonal index i = 0, $\theta_1$ represents the phase value of the differential correlation between the received control channel DMRS and the control channel for candidate orthogonal index i = 1, and $\theta_2$ represents the phase value of the differential correlation between the received control channel DMRS and the control channel for candidate orthogonal index i = 0.

[Equation 5]

$$\theta_0 = \left| \tan^{-1} \left\{ \frac{Imag(diffCorr)}{Real(diffCorr)} \right\} \right|$$

[Equation 6]

$$\theta_1 = \left| \tan^{-1} \left\{ \frac{Imag\left(diffCorr \cdot e^{j\theta_{pr,1}}\right)}{Real\left(diffCorr \cdot e^{j\theta_{pr,1}}\right)} \right\} \right|$$

[Equation 7]

$$\theta_2 = \left| \tan^{-1} \left\{ \frac{Imag\left(diffCorr \cdot e^{j\theta_{pr,2}}\right)}{Real\left(diffCorr \cdot e^{j\theta_{pr,2}}\right)} \right\} \right|$$

That is, the result of the differential correlation operation for candidate orthogonal index i = 1 may be represented as *diffCorr·* $e^{j\theta_{pr,1}}$, and the result of the differential correlation operation for candidate orthogonal index i = 2 may be represented as *diffCorr·* $e^{j\theta_{pr,2}}$. Here, the phase rotation values ($\theta_{pr,1}$, $\theta_{pr,2}$) may be 2/3$\pi$ and -2/3$\pi$, respectively.

As shown in Equations 6 and 7, instead of generating control channel DMRSs for all candidate orthogonal indices and comparing the generated control channel DMRSs with the received control channel DMRS (by performing the correlation operation and the differential correlation operation), the proposed method generates only the control channel DMRS for candidate orthogonal index i = 0, compares the generated control channel DMRS with the received control channel DMRS to obtain the phase value of the differential correlation. For remaining candidate orthogonal indices i = 1 and 2, the proposed method applies phase rotation values to the differential correlation for orthogonal index i = 0 to obtain the phase values of the differential correlation.

2) Second process (acquisition of phase values of differential correlation for all candidate orthogonal indices by reflecting timing errors)

As described above, since SL communication often involves transmission and reception while the transmitting and receiving sides are in motion, the SL communication needs to be robust to timing errors. To reflect such timing errors, it is necessary to perform phase compensation.

When timing errors are present, the linear phase difference between two consecutive subcarriers may be defined as follows.

$$[Equation\ 8]$$

$$LP_{subcarrier} = \frac{2\pi}{FFT\_SIZE} \cdot TO$$

If FFT_SIZE is 1024 and the subcarrier spacing is 30 kHz, the length of a normal cyclic prefix (CP) corresponds to 72 samples. In this case, considering only timing errors within the CP range, a timing error of at least 0 to 72 samples may occur, and a SL control channel (PSCCH) DMRS is spaced at intervals of 4 subcarriers (see Equation 1).

If a timing error of up to 72 samples occurs, the maximum linear phase difference that may occur between two consecutive DMRSs is as follows.

$$[Equation\ 9]$$

$$LP_{max,DMRS} = \frac{2\pi}{1024} \cdot 72 \cdot 4 = 1.767145867644259 \cong \frac{9\pi}{16}$$

Therefore, assuming an ideal channel condition, phase compensation corresponding to the maximum linear phase difference value of -9π/16 may be applied to the differential correlation value. Thus, the phase value of the differential correlation becomes 0 even when a timing error of up to 72 samples occurs.

Accordingly, the phase values obtained by performing phase compensation reflecting timing errors for $\theta_0$, $\theta_1$, and $\theta_2$ are as follows.

$$[Equation\ 10]$$

$$\theta_{pc,0} = \left| \tan^{-1} \left\{ \frac{Imag\left(diffCorr \cdot e^{j\theta_{pc}}\right)}{Real\left(diffCorr \cdot e^{j\theta_{pc}}\right)} \right\} \right|$$

$$[Equation\ 11]$$

$$\theta_{pc,1} = \left| \tan^{-1} \left\{ \frac{Imag\left(diffCorr \cdot e^{j\theta_{pr,1}} \cdot e^{j\theta_{pc}}\right)}{Real\left(diffCorr \cdot e^{j\theta_{pr,1}} \cdot e^{j\theta_{pc}}\right)} \right\} \right|$$

$$[Equation\ 12]$$

$$\theta_{pc,2} = \left| \tan^{-1} \left\{ \frac{Imag\left(diffCorr \cdot e^{j\theta_{pr,2}} \cdot e^{j\theta_{pc}}\right)}{Real\left(diffCorr \cdot e^{j\theta_{pr,2}} \cdot e^{j\theta_{pc}}\right)} \right\} \right|$$

That is, the phase compensation result of the differential correlation for candidate orthogonal index i = 0 may be represented as *diffCorr* $e^{j\theta_{pr}}$, the phase compensation result of the differential correlation for candidate orthogonal index i = 1 may be represented as *diffCorr* $e^{j\theta_{pr,1}} \cdot e^{j\theta_{pr}}$, and the phase compensation result of the differential correlation for candidate orthogonal index i = 2 may be represented as *diffCorr* $e^{j\theta_{pr,2}} \cdot e^{j\theta_{pe}}$. Here, the phase compensation value ($\theta_{pc}$) may be -9/16π.

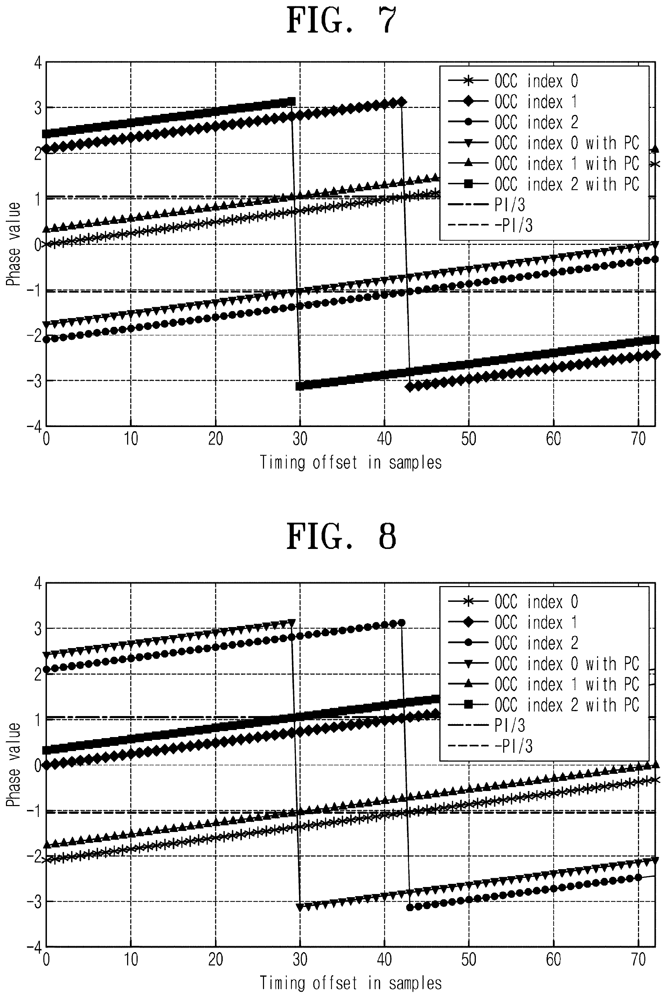

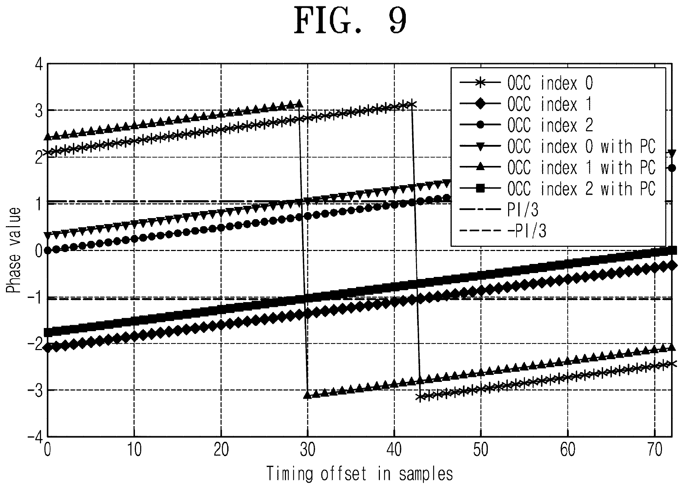

The results of phase value calculations according to Equations 5 to 7 and Equations 10 to 12, obtained through simulation based on timing errors (timing offsets) are shown in FIGs. 7 to 9.

The simulations related to FIGs. 7 to 9 correspond to cases where control channel DMRSs with orthogonal indices (OCC indices) 0, 1, and 2 are received (transmitted), respectively.

Each of FIGs. 7 to 9 illustrates six phase values depending on timing offsets, which correspond to $\theta_0$ (OCC index 0), $\theta_1$ (OCC index 1), $\theta_2$ (OCC index 2), $\theta pc_{,0}$ (OCC index 0 with PC), $\theta pc_{,1}$ (OCC index 1 with PC), and $\theta pc_{,2}$ (OCC index 2 with PC), respectively.

In FIGs. 7 to 9, it is seen that, for each timing offset value, the orthogonal index corresponding to the phase value with the minimum magnitude corresponds to the orthogonal index used in the control channel DMRS (i.e., indices 0, 1, and 2).

This is consistent with the above explanation that, based on the similarity determination between the received candidate control channel DMRS and the control channel DMRS generated by the receiving side, the phase of the differential correlation value is expected to be close to 0 if the DMRSs are the same.

Referring back to Equation 4, in the calculation of the second value (normPower), diffEnergy (differential energy) is the squared value (power value) of the differential correlation result of $h\,_{0,l}^{CCH(p)}$ at consecutive resource locations (subcarriers) and the accumulated sum thereof. The second value (normPower) corresponds to the result of dividing the square value of the first value by the product of diffEnergy and the number of differential correlation operations (or

$$N\,_{sym}^{PSCCH} \cdot N\,_{ant}^{Rx} \cdot (N\,_{RB}^{PSCCH} \cdot 3 - 1)).$$

As the output of the phase rotation and compensator 123 illustrated in FIG. 6, $\theta_0$, $\theta_1$, $\theta_2$, $\theta pc_{,0}$, $\theta pc_{,1}$, and $\theta pc_{,2}$ are obtained, and these values are used as inputs to a detection determiner 13.

The detection determiner 13 determines which orthogonal index is used to generate the received candidate control channel DMRS. In this case, not only the first value (diffCorr) from the differential correlation but also the second value (normPower) is used. The second value is intended to account for the power of the received candidate control channel DMRS. Accordingly, the detection determiner 13 considers both the phase value and the power value of the differential correlation.

1) First process - Detection of orthogonal index with minimum phase value

[Equation 13]

$$minAbsPhase = \theta_0\,;$$
$$detOCCIndex = 0;$$

for $i = 1$ to 2
    if $minAbsPhase > \theta_i$
    $minAbsPhase = \theta_i\,;$
    $detOCCIndex = i;$
    end
end

for $i = 0$ to 2
    if $minAbsPhase > \theta_{pc,i}$
    $minAbsPhase = \theta_{pc,i}\,;$
    $detOCCIndex = i;$
    end
end

The first process is a process for determining the minimum phase value (minAbsPhase) and the corresponding orthogonal index. As described with reference to FIG. 6 and FIGs. 7 to 9, the smallest value among the obtained following values: $\theta_0$, $\theta_1$, $\theta_2$, $\theta pc_{,0}$, $\theta pc_{,1}$, and $\theta pc_{,2}$ is selected, and the orthogonal index corresponding to that value is determined. This process is represented as shown in Equation 13.

2) Second step - Comparison between minimum phase value and phase reference value, and comparison between power value and power reference value

The minimum phase value does not necessarily indicate successful detection of the control channel or control channel DMRS. To this end, the receiving side may compare the previously obtained second value (normPower) with a power reference value, and compare the minimum phase value with a phase reference value.

If the second value (normPower) is greater than the power reference value and the minimum phase value is smaller than the phase reference value, the receiving side successfully detects the control channel or control channel DMRS, and the corresponding orthogonal index at that time is detOCCIndex (0, 1, or 2).

Otherwise, the receiving side determines that the detection of the control channel or control channel DMRS fails.

Here, the power reference value (Thpower) and the phase reference value ($2/3\pi$) may also be expressed using other terms. The values correspond to values that may be configured by the transmission/reception system or the receiving side. This process is represented as shown in Equation 14.

[Equation 14]

$$\text{if } normPower > Thpower \,\&\&\, minAbsPhase < 1.047197551196598 \,(= \pi/3)$$

$\quad$ Successful PSCCH detection

$\quad$ Detected orthogonal index $= detOCCIndex$

else

$\quad$ PSCCH detection failure

end

Meanwhile, the detection determination method according to Equation 13 may increase processing loads in implementation, as each phase value involves a $\tan^{-1}$ operation as shown in Equations 5 to 7 and Equations 10 to 12.

Therefore, the following method that does not use the $\tan^{-1}$ operation may be applied.

[Equation 15]

$$
\begin{aligned}
&phaseTmp = 0; \\
&If\ real(diffCorr) > 0 \\
&\quad real(phaseTmp) = real(diffCorr); \\
&\quad imag(phaseTmp) = |imag(diffCorr)|; \\
&else \\
&\quad real(phaseTmp) = 1; \\
&\quad imag(phaseTmp) = 999999; \quad /* \text{ The largest positive value within the possible} \quad */ \\
&end \quad\quad\quad\quad\quad\quad\quad\quad\quad\quad\quad \text{numerical range} \\
&detOCCIndex = 0;
\end{aligned}
$$

The procedure according to Equation 15 is performed first, where the previously obtained first value (diffCorr) is used. The first value is obtained for orthogonal index 0. If the first value lies in the first or fourth quadrant, the real part of the first value is set as the real part of phaseTmp, and the absolute value of the imaginary part of the first value is set as the imaginary part of phaseTmp. If the first value lies in the second or third quadrant, the real part of phaseTmp is set to 0, and the imaginary part is set to the maximum value. Then, the orthogonal index (detOCCIndex) corresponding to the minimum phase is temporarily set to 0.

The condition in Equation 15 is to determine whether the first value lies in the first or fourth quadrant. Since this process aims to determine the minimum phase value of the differential correlation for each orthogonal index, if the phase of the differential correlation value for orthogonal index 0 does not lie in the first or fourth quadrant (as described in Equation 14, it is checked whether the value is smaller than a reference phase value of $1/3\pi$) (that is, since the absolute value of the phase of the first value is greater than $1/2\pi$), it is not considered a candidate for the minimum phase value.

[Equation 16]

$$\begin{aligned} &for\ k = 1\ to\ 5 \\ &\quad tmp = diffCorr \times phaseVal[k-1]; \\ &\quad phase = |imag(tmp)|; \\[6pt] &\quad If\ real(tmp) > 0\ and\ phase < imag(phaseTmp) \\ &\quad\quad real(phaseTmp) = real(tmp); \\ &\quad\quad imag(phaseTmp) = phase; \\ &\quad\quad detOCCIndex = (k\%3); \\ &\quad end \\ &end \end{aligned}$$

[Table 1]

| Index (k-1) | phaseVal[k-1] (phase compensation (or rotation) value) |
|---|---|
| 0 | $e^{j2/3\pi}$ |
| 1 | $e^{-j2/3\pi}$ |
| 2 | $e^{-j9/16\pi}$ |
| 3 | $e^{-j5/48\pi}$ |
| 4 | $e^{-j59/48\pi}$ |

Next, the procedure according to Equation 16 is performed.

For k (1, 2, 3, 4, 5), the result of applying the phase compensation (or rotation) values shown in Table 1 to the first value (diffCorr) is compared with phaseTmp determined in Equation 15, in order to find whether a smaller phase value exists. The phase compensation (or rotation) values shown in Table 1 are the same as those expressed in Equations 6 to 7 and Equations 10 to 12.

That is, when the condition in Equation 16 is satisfied, the index corresponding to the minimum phase is newly configured. This occurs when a value (tmp), which is obtained by applying phase compensation to the first value (diffCorr), lies in the first or fourth quadrant and the magnitude of the imaginary part of tmp is smaller than that of phaseTmp determined in Equation 15. Since the differential correlation value is based on a pseudo-random sequence of magnitude 1, the overall magnitude is 1. Therefore, phase magnitude comparison may be performed using the real or imaginary part. In Equation 16, the magnitudes of the imaginary parts of tmp and phaseTmp are compared as a condition, but alternatively, the condition may be modified to compare the real parts to determine whether tmp is greater than phaseTmp.

If there is a value with a smaller phase than the reference value (phaseTmp) based on the first value (diffCorr), the receiving side sets the real and imaginary parts of the corresponding value as the real and imaginary parts of phaseTmp, respectively. Based on the corresponding k value at that time, the receiving side may determine the orthogonal index (detOCCIndex) corresponding to the minimum phase.

Subsequently, based on the determined real and imaginary parts of phaseTmp, the receiving side may calculate the minimum phase value (minAbsPhase) as follows.

[Equation 17]

$$minAbsPhase = \tan^{-1}(Imag\{phaseTmp\}\ /\ real\{phaseTmp\};$$

Thereafter, the receiving side may determine whether the detection of the control channel is successful and, if successful, determine the detected orthogonal index by comparing the minimum phase value with the phase reference value and the normalized power value with the power reference value, as expressed in Equation 14.

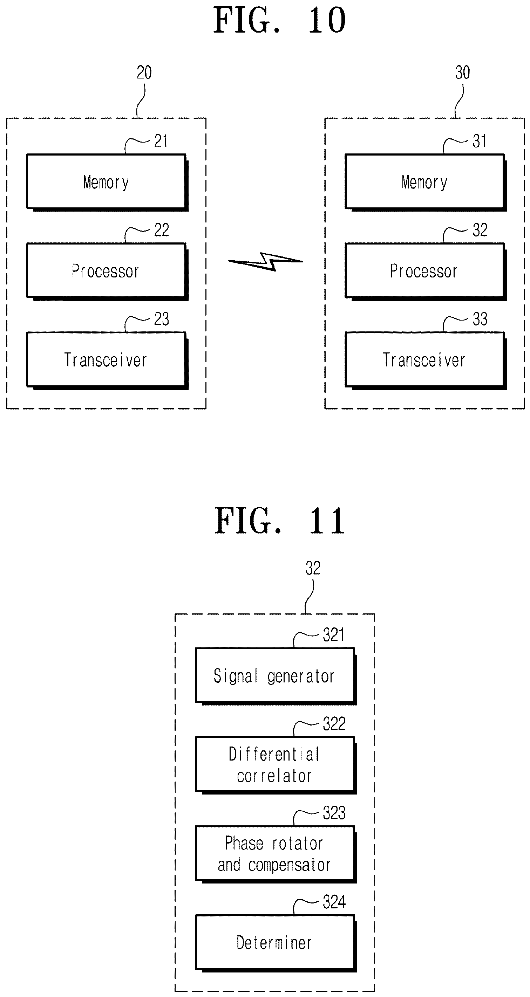

FIG. 10 illustrates block diagrams of a transmitting device and a receiving device.

The transmitting device 20 refers to a transmitting-side device that performs transmission such as transmitting messages and data for V2X communication. However, since communication always involves both transmission and reception, the transmitting device 20 may also receive messages, data, etc.

The transmitting device 20 may include a memory 21 for storing messages, data, and information, a processor 22 for processing messages, data, and information, and a transceiver 23 for transmitting or receiving messages, data, and information.

The receiving device 30 refers to a receiving-side device that performs reception such as receiving messages and data for V2X communication. The receiving device 30 may also transmit messages and data.

The receiving device 30 may include a memory 31 for storing messages, data, and information, a processor 32 for processing messages, data, and information, and a transceiver 33 for transmitting or receiving messages, data, and information.

The transmitting device 20 and the receiving device 30 may each be mounted on equipment or devices for V2X communication, such as vehicles or RSUs.

The transmitting device 20 may transmit an SL channel to the receiving device 30 via SL, and the receiving device 30 may detect the SL channel to obtain necessary information. As described above, SL also consists of a control channel, which indicates a data channel, and the data channel, and reception of the control channel is required in order to receive the data channel.

However, SL is designed such that the transmitting device 20 randomly selects one from a preconfigured set of parameters (i.e., multiple candidate orthogonal indices i), instead of using orthogonal index i agreed upon between the transmitting device 20 and the receiving device 30. Accordingly, the receiving device 30 needs to receive the SL control channel efficiently, rather than attempting to decode all parameter sets. In addition, due to the nature of V2X communication, timing errors are likely to occur, and thus, a control channel reception method is required.

To this end, the technique described with reference to FIGs. 4 to 6 may be performed in the receiving device 30. According to this technique, the receiving device 30 may detect the control channel and determine the used orthogonal index without attempting to decode all signals received in a candidate resource region.

FIG. 11 illustrates a block diagram of the processor 32 of the receiving device 30. The receiving device 30 performs operations related to detection of a control channel DMRS in SL communication, as described with reference to FIGs. 4 to 6. That is, the processor 32 is configured to receive the control channel DMRS.

The processor 32 may include a signal generator 321, a differential correlator 322, a phase rotator and compensator 323, and a determiner 324.

The signal generator 321 may generate a control channel DMRS for each candidate orthogonal index. The generation of the control channel DMRS is performed based on Equation 2 and the related description provided above.

The differential correlator 322 may perform a correlation operation between a candidate control channel DMRS received from the transmitting device 20 via the transceiver (33) and the DMRS generated by the signal generator 321. The differential correlator 322 may perform a differential correlation operation on the result of the correlation ( $h_{0,l}^{CCH(p)}$ ). Then, the differential correlator 322 accumulates the results of the differential correlation to obtain a first value (diffCorr).

In addition, the differential correlator 322 may calculate the squared value (power value) of the differential correlation results and accumulate the squared values to compute an accumulated power value (diffEnergy). The differential correlator 322 may square the first value and divide the squared value by the accumulated power value multiplied by a constant to compute a second value (normPower).

The phase rotator and compensator 323 may apply phase rotation or phase compensation to the obtained first value (diffCorr) as illustrated in FIG. 6 and using Equations 5 to 7 and Equations 10 to 12. The phase rotation values ($\theta_{pr,1}$, $\theta_{pr,2}$) may be $2/3\pi$ and $-2/3\pi$, respectively. In addition, the phase compensation value ($\theta_{pc}$) may be $-9/16\pi$.

By applying the phase rotation or phase compensation, the phase rotator and compensator 323 may obtain the phase values and compensated phase values for each candidate orthogonal index. That is, the phase rotator and compensator 323 may obtain a phase value ($\theta_0$) and a compensated phase value ($\theta pc_{,0}$) for candidate orthogonal index 0, a phase value ($\theta_1$) and a compensated phase value ($\theta pc_{,1}$) for candidate orthogonal index 1, and a phase value ($\theta_2$) and a compensated phase value ($\theta pc_{,2}$) for candidate orthogonal index 2.

The phase rotator and compensator 323 may determine a minimum phase value (minAbsPhase) among the obtained multiple phase values and a corresponding orthogonal index (detOCCIndex).

The determiner 324 may compare the second value (normPower) obtained from the differential correlator 322 with a reference power value, and compare the minimum phase value with a reference phase value. If the result of the comparison shows that the second value is greater than the reference power value and the minimum phase value is smaller than the reference phase value, the determiner 324 determines that the detection of the control channel is successful and identifies the detected orthogonal index as an orthogonal index corresponding to the minimum phase value. If either of the two values does not satisfy the above conditions, the determiner 324 may determine that the detection of the control channel fails.

Meanwhile, the phase rotator and compensator 323 may detect the minimum phase value (minAbsPhase) and a minimum phase index (minPhaseIdx) using Equation 15, Equation 16, and Table 1, instead of using FIG. 6 and Equations 5 to 7 and 10 to 12. In this case, the determiner 324 performs the comparison between the minimum phase value and the reference phase value and the comparison between the normalized power value and the reference power value according to Equation 14. Then, the determiner 324 may determine the success of the control channel detection and, if successful, the detected orthogonal index.

The operations of the receiving side or the processor of the receiving device related to FIG. 11 may utilize the technical content described above with reference to FIGs. 1 to 6.

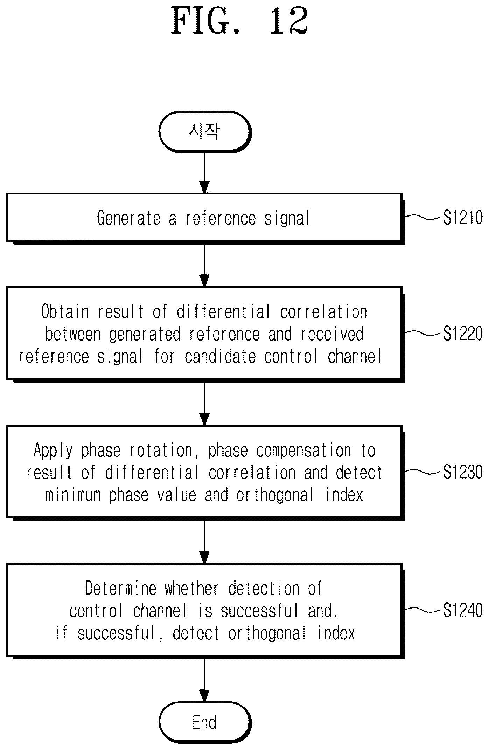

FIG. 12 illustrates a flowchart of a control channel reception method. The method may be performed by a receiving side or device with respect to a control channel.

The receiving side may generate a reference signal (e.g., PSCCH DMRS) for the control channel (S1210). In this case, an orthogonal index used for generating the reference signal may be any one of candidate orthogonal indices. The reference signal for the control channel (e.g., PSCCH DMRS) is defined in 3GPP TS 38.211 and could be found in the description related to Equations 1 and 2.

The receiving side may calculate correlation between the generated reference signal for the control channel and a reference signal for a candidate control channel received from a transmitting side, and then calculate the result of differential correlation based on the calculated correlation (S1220). The result of the differential correlation includes a differential correlation value (diffCorr), a differential energy value (diffEnergy), and a normalized power value (norm-Power). In addition, the result may also include other values described in FIG. 5 and Equation 4. For the calculation of the correlation value, differential correlation value, and differential energy value, refer to FIG. 5 and the related explanation of Equation 4.

The receiving side may apply phase rotation and/or phase compensation to the result of the differential correlation to detect a minimum phase value and a corresponding orthogonal index (S1230). For the phase rotation and/or phase compensation, refer to FIG. 6, Equations 5 to 7, Equations 10 to 12, Equation 16, Table 1, and the related description.

The receiving side may compare the normalized power value (normPower) calculated in S1220 and the minimum phase value detected in S1230 with a reference power value and a reference phase value, respectively, and then determine whether the detection of the control channel is successful and, if successful, detect an orthogonal index (S1240). If the normalized power value is greater than the reference power value and the minimum phase value is smaller than the reference phase value, the receiving side determines that the control channel is successfully detected and identifies an orthogonal index associated with the control channel as an index corresponding to the minimum phase value.

The control channel reception method related to FIG. 12 may utilize the technical content described above with reference to FIGs. 1 to 6.

The DMRS or the generation thereof described in this specification may not necessarily be performed in the exact same manner as Equation 1. In addition, the terms DMRS, PSCCH, and control channel are merely names, and the present disclosure may be applied to signals for receiving a specific channel.

In another aspect of the present disclosure, the above-described proposals or inventive operations may also be provided as code capable of being implemented, performed, or executed by a "computer" (i.e., a comprehensive concept including a system-on-chip (SoC) or a processor (or microprocessor)), a computer-readable storage medium including the aforementioned code, or a computer program product. The scope of the present disclosure may be extended to the code, the computer-readable storage medium including the code, or the computer program product.

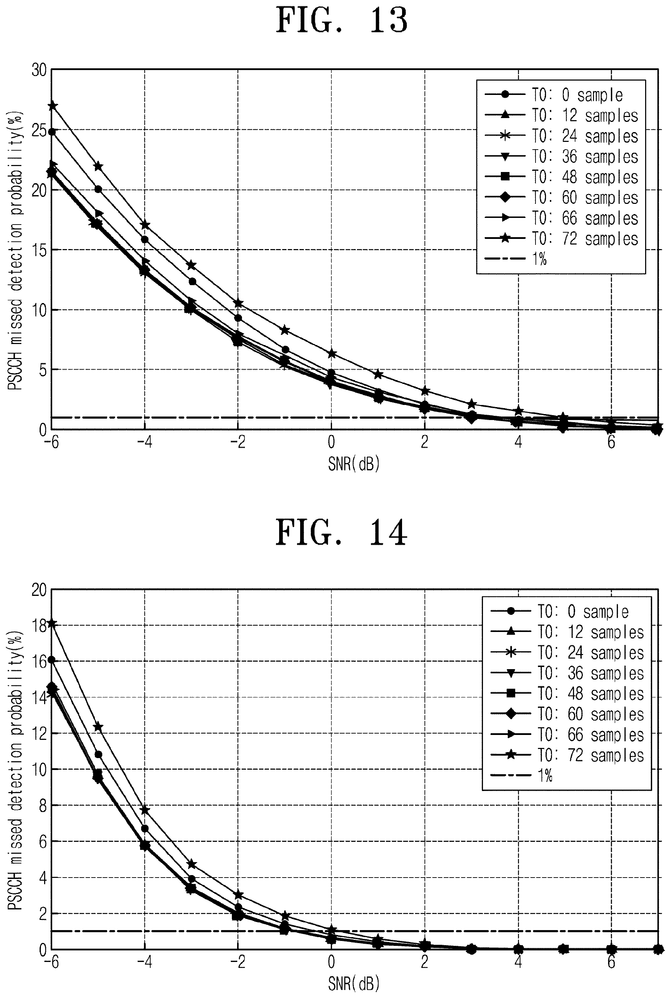

FIGs. 13 to 16 illustrate simulation results related to control channel reception.

FIGs. 13 and 14 respectively show the probability of failing to correctly detect the power and orthogonal index of a control channel under a condition that the control channel exists in a candidate subchannel when the number of receiving antennas is 1 and 2. In the simulation, the reference power value used is 0.08, and the number of slots used is 5000. The results are based on a TDLA30-1400 fading channel with a transmitted orthogonal index set to 1.

In the 3GPP standard specification, when the SNR is 4.7 dB and two receiving antennas are used, the probability of failing to correctly detect the power and orthogonal index of the control channel is required to be 1% or less. Referring to FIG. 14, it is confirmed that the detection failure probability is 1% or less at an SNR of 4.7 dB.

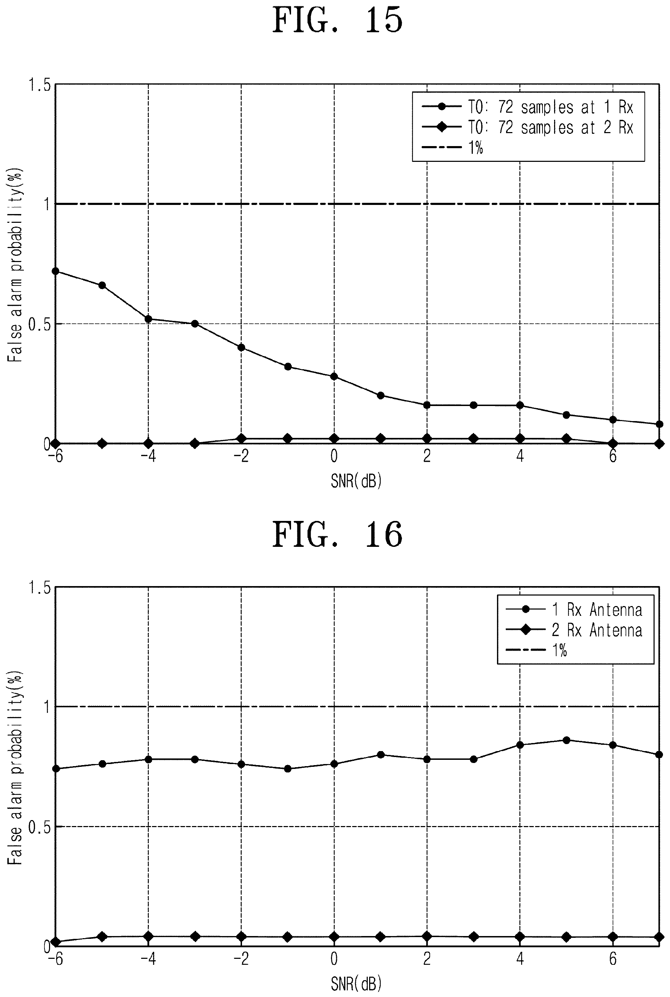

FIGs. 15 and 16 respectively show the probability of false detection of a control channel when interference from a data channel exists in a candidate subchannel, and the probability of false detection of a control channel when no signal exists in a candidate subchannel.

In both cases where the number of receiving antennas is 1 and 2, if data channel interference exists in the candidate subchannel, the detection error probability is 1% or less at SNR = 4.7 dB (FIG. 15). When there is no signal in the candidate subchannel, the detection error probability is also 1% or less at SNR = 4.7 dB (FIG. 16).

The exemplary embodiments of the present disclosure have been provided to enable those skilled in the art related to the present disclosure to implement and practice the present disclosure. Although the above description has been provided with reference to the exemplary embodiments of the present disclosure, it will be understood by those skilled in the art that the present disclosure as set forth in the claims below may be modified and varied in various ways. Therefore, the present disclosure is intended to provide the broadest scope consistent with the principles and novel features disclosed herein, rather than being limited to the embodiments disclosed herein.

**Claims**

1. A method for receiving a control channel in sidelink communication, the method comprising:

   generating a reference signal for the control channel based on a first index among a plurality of candidate orthogonal indices;

   performing a differential correlation operation on correlation between a received reference signal for a candidate control channel and the generated reference signal;

   detecting a minimum phase value and an orthogonal index corresponding to the minimum phase value by applying phase rotation or phase compensation to a result of the differential correlation operation; and

   determining whether the control channel is successfully detected or an orthogonal index used for the control channel, based on the minimum phase value and a normalized power value obtained from the differential correlation operation.

2. The method of claim 1, wherein applying the phase rotation comprises applying phase differences preconfigured among the first index and remaining candidate orthogonal indices to an accumulated sum of differential correlation values for all unit frequency resources of the control channel.

3. The method of claim 1, wherein applying the phase compensation comprises applying a maximum linear phase difference to an accumulated sum of differential correlation values for all unit frequency resources of the control channel, and

   wherein the maximum linear phase difference reflects a maximum timing error corresponding to a length of a cyclic prefix of the control channel.

4. The method of claim 1, wherein detecting the orthogonal index comprises obtaining two phase values for each of the plurality of candidate orthogonal indices by applying the phase rotation or the phase compensation to an accumulated sum of differential correlation values for all unit frequency resources of the control channel.

5. The method of claim 1, wherein the normalized power value is proportional to a square of an accumulated sum of differential correlation values for all unit frequency resources of the control channel, and

   wherein the normalized power value is inversely proportional to an accumulated sum of squares of the differential correlation values for all unit frequency resources of the control channel.

6. The method of claim 1, comprising, based on that the minimum phase value is smaller than a phase reference value and that the normalized power value is greater than a power reference value, determining that the control channel is successfully detected.

7. The method of claim 6, comprising determining the orthogonal index corresponding to the minimum phase value as the orthogonal index for the control channel.

8. The method of claim 1, comprising obtaining differential correlation for a second index and a third index among the plurality of candidate orthogonal indices by applying the phase rotation to the result of the differential correlation operation,

   wherein an operation result of the differential correlation for the second index is $diffCorr \cdot e^{j\theta_{pr,\,1}}$, and

   wherein an operation result of the differential correlation for the third index is $diffCorr \cdot e^{j\theta_{pr,\,2}}$,

   where diffCorr is an operation result of differential correlation for the first index, $\theta_{pr,1}$ is a phase rotation value for the second index, and $\theta_{pr,2}$ is a phase rotation value for the third index.

9. The method of claim 8, comprising obtaining phase compensation results of differential correlation for the plurality of candidate orthogonal indices by applying the phase compensation to the operation results of the differential correlation to which the phase rotation is applied,

   wherein a phase compensation result of the differential correlation for the first index is $diffCorr \cdot e^{j\theta_{pc}}$,

   wherein a phase compensation result of the differential correlation for the second index is $diffCorr \cdot e^{j\theta_{pr,\,1}} \cdot e^{j\theta_{pc}}$,

   wherein a phase compensation result of the differential correlation for the third index is $diffCorr \cdot e^{j\theta_{pr,\,2}} \cdot e^{j\theta_{pc}}$, and

   where diffCorr is the operation result of the differential correlation for the first index, $\theta_{pr,1}$ is the phase rotation value for the second index, $\theta_{pr,2}$ is the phase rotation value for the third index, and $\theta_{pc}$ is a phase compensation value.

10. An apparatus configured to receive a control channel in sidelink communication, the apparatus comprising:

a signal generator configured to generate a reference signal for the control channel based on a first index among a plurality of candidate orthogonal indices;

a differential correlator configured to perform a differential correlation operation on correlation between a received reference signal for a candidate control channel and the generated reference signal;

a phase rotator and compensator configured to detect a minimum phase value and an orthogonal index corresponding to the minimum phase value by applying phase rotation or phase compensation to a result of the differential correlation operation; and

a determiner configured to determine whether the control channel is successfully detected or an orthogonal index used for the control channel, based on the minimum phase value and a normalized power value obtained from the differential correlation operation.

11. The apparatus of claim 10, wherein the phase rotator and compensator is configured to apply phase differences preconfigured among the first index and remaining candidate orthogonal indices to an accumulated sum of differential correlation values for all unit frequency resources of the control channel.

12. The apparatus of claim 10, wherein the phase rotator and compensator is configured to apply a maximum linear phase difference to an accumulated sum of differential correlation values for all unit frequency resources of the control channel, and

wherein the maximum linear phase difference reflects a maximum timing error corresponding to a length of a cyclic prefix of the control channel.

13. The apparatus of claim 10, wherein the phase rotator and compensator is configured to obtain two phase values for each of the plurality of candidate orthogonal indices by applying the phase rotation or the phase compensation to an accumulated sum of differential correlation values for all unit frequency resources of the control channel.

14. The apparatus of claim 10, wherein the normalized power value is proportional to a square of an accumulated sum of differential correlation values for all unit frequency resources of the control channel, and

wherein the normalized power value is inversely proportional to an accumulated sum of squares of the differential correlation values for all unit frequency resources of the control channel.

15. The apparatus of claim 10, wherein the determiner is configured to determine that the control channel is successfully detected, based on that the minimum phase value is smaller than a phase reference value and that the normalized power value is greater than a power reference value.

16. The apparatus of claim 15, wherein the determiner is configured to determine the orthogonal index corresponding to the minimum phase value as the orthogonal index for the control channel.

17. The apparatus of claim 10, wherein the phase rotator and compensator is configured to obtain differential correlation for a second index and a third index among the plurality of candidate orthogonal indices by applying the phase rotation to the result of the differential correlation operation,

wherein an operation result of the differential correlation for the second index is $diffCorr \cdot e^{j\theta_{pr,1}}$, and

wherein an operation result of the differential correlation for the third index is $diffCorr \cdot e^{j\theta_{pr,2}}$,

where diffCorr is an operation result of differential correlation for the first index, $\theta_{pr,1}$ is a phase rotation value for the second index, and $\theta_{pr,2}$ is a phase rotation value for the third index.

18. The apparatus of claim 17, wherein the phase rotator and compensator is configured to obtain phase compensation results of differential correlation for the plurality of candidate orthogonal indices by applying the phase compensation to the operation results of the differential correlation to which the phase rotation is applied,

wherein a phase compensation result of the differential correlation for the first index is $diffCorr \cdot e^{j\theta_{pc}}$,

wherein a phase compensation result of the differential correlation for the second index is $diffCorr \cdot e^{j\theta_{pr,1}} \cdot e^{j\theta_{pc}}$,

wherein a phase compensation result of the differential correlation for the third index is $diffCorr \cdot e^{j\theta_{pr,2}} \cdot e^{j\theta_{pc}}$, and

where diffCorr is the operation result of the differential correlation for the first index, $\theta_{pr,1}$ is the phase rotation value for the second index, $\theta_{pr,2}$ is the phase rotation value for the third index, and $\theta_{pc}$ is a phase compensation value.

**19.** A non-transitory computer-readable medium storing a computer program for performing the method according to any one of claims 1 to 9.

# FIG. 1

# FIG. 2

1 slot(=14 symbols)

Sidelink bandwidth part (bwPB/bwPC)

numsubchannel

Guard symbol

Sidelink Tx resource pool

subchannelSize

Start RbSubchannel

length Symbols

Duplicated symbol

Start Symbols

Frequency

Time

1 slot (= 140FDM symbols)

$N_{sym}^{SL}$

FIG. 3

$N_{sym}^{PSCCH}$

$l = 0$　　　　　　　　　　　　　　　　　$l = 13$

$n_{startSym}^{SL}$

Duplicated symbol

$N_{RE}^{PSCCH}$

$12 \cdot N_{RB}^{PSCCH}$

Guard symbol

$N_{RE}^{BWP}$

1 RB　　　1 RB　　　1 RB

$12 \cdot n_{RB}^{start}$

Frequency

Time

Subcarrier index

11
10
9  PSCCH DMRS
8
7
6
5  PSCCH DMRS
4
3
2
1  PSCCH DMRS
0

PSSCH DMRS
PSSCH DMRS
PSSCH DMRS
PSSCH DMRS
PSSCH DMRS
PSSCH DMRS

Legend
PSCCH data subcarrier
PSCCH DMRS subcarrier
PSSCH data subcarrier
PSSCH DMRS subcarrier
Sidelink bandwidth part

EP 4 730 725 A1

# FIG. 4

Parameters

11

Self DMRS & $\omega_{f,\iota}(\kappa')$ generation

Received DMRS

12

Differential correlation, phase rotation, and compensation

13

Detection determination

# FIG. 5

$p = 0$ to $(N_{ant}^{Rx} - 1)$    $l = (n_{startSym}^{SL} + 1)$ to

$(n_{startSym}^{SL} + N_{sym}^{PSCCH} + 1)$

# FIG. 6

## FIG. 7

## FIG. 8

# FIG. 9

# FIG. 10

20

21

Memory

22

Processor

23

Transceiver

30

31

Memory

32

Processor

33

Transceiver

# FIG. 11

32

321

Signal generator

322

Differential correlator

323

Phase rotator and compensator

324

Determiner

# FIG. 12

시작

Generate a reference signal — S1210

Obtain result of differential correlation
between generated reference and received
reference signal for candidate control channel — S1220

Apply phase rotation, phase compensation to
result of differential correlation and detect
minimum phase value and orthogonal index — S1230

Determine whether detection of
control channel is successful and,
if successful, detect orthogonal index — S1240

End

# FIG. 13

# FIG. 14

# FIG. 15

# FIG. 16

## INTERNATIONAL SEARCH REPORT

| International application No. |
|---|
| **PCT/KR2023/008186** |

### A. CLASSIFICATION OF SUBJECT MATTER

**H04L 27/26**(2006.01)i; **H04L 7/04**(2006.01)i

According to International Patent Classification (IPC) or to both national classification and IPC

### B. FIELDS SEARCHED

Minimum documentation searched (classification system followed by classification symbols)

H04L 27/26(2006.01); H04B 7/06(2006.01); H04J 13/00(2011.01); H04L 1/18(2006.01); H04W 72/0457(2023.01); H04W 72/21(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PSCCH(Physical Sidelink Control Channel), DMRS(Demodulation Reference Signal), 사이드링크(sidelink), 후보 직교 인덱스(candidate orthogonal index), 기준 신호(reference signal), 차등 상관 (differential correlation), 위상 회전(phase rotation), 위상 보정(phase correction), 정규화(normalization), 전력(power), 검출 (detecting)

### C. DOCUMENTS CONSIDERED TO BE RELEVANT

| Category* | Citation of document, with indication, where appropriate, of the relevant passages | Relevant to claim No. |
|---|---|---|
| A | KR 10-2262474 B1 (ETTIFOS CO.) 08 June 2021 (2021-06-08)<br>See paragraphs [0024], [0048]-[0054], [0062]-[0065] and [0164]; and figure 9. | 1-19 |
| A | KR 10-2021-0093358 A (QUALCOMM INCORPORATED) 27 July 2021 (2021-07-27)<br>See paragraphs [0029]-[0045]. | 1-19 |
| A | KR 10-2023-0049707 A (HUAWEI TECHNOLOGIES CO., LTD.) 13 April 2023 (2023-04-13)<br>See paragraphs [0046]-[0060] and [0166]-[0207]; and claim 1. | 1-19 |
| A | KR 10-2019-0104414 A (LG ELECTRONICS INC.) 09 September 2019 (2019-09-09)<br>See paragraphs [0023] and [0111]-[0116]; and claims 1-12. | 1-19 |
| A | KR 10-1660941 B1 (SAMSUNG ELECTRONICS CO., LTD.) 28 September 2016 (2016-09-28)<br>See paragraphs [0049]-[0065]; and claims 1-3. | 1-19 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 March 2024** | **06 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 730 725 A1

**INTERNATIONAL SEARCH REPORT**
Information on patent family members

International application No.

**PCT/KR2023/008186**

| Patent document cited in search report | | | Publication date (day/month/year) | Patent family member(s) | | | Publication date (day/month/year) |
|---|---|---|---|---|---|---|---|
| KR | 10-2262474 | B1 | 08 June 2021 | None | | | |
| KR | 10-2021-0093358 | A | 27 July 2021 | CN | 113439408 | A | 24 September 2021 |
| | | | | CN | 113439408 | B | 05 August 2022 |
| | | | | EP | 3915215 | A1 | 01 December 2021 |
| | | | | EP | 3915215 | B1 | 01 November 2023 |
| | | | | EP | 3915215 | C0 | 01 November 2023 |
| | | | | SG | 11202106527 | A | 30 August 2021 |
| | | | | TW | 202032958 | A | 01 September 2020 |
| | | | | US | 10924252 | B2 | 16 February 2021 |
| | | | | US | 2020-0235900 | A1 | 23 July 2020 |
| | | | | WO | 2020-154183 | A1 | 30 July 2020 |
| KR | 10-2023-0049707 | A | 13 April 2023 | CN | 115208533 | A | 18 October 2022 |
| | | | | CN | 116055018 | A | 02 May 2023 |
| | | | | CN | 116055018 | B | 29 September 2023 |
| | | | | EP | 4178299 | A1 | 10 May 2023 |
| | | | | JP | 2023-544285 | A | 23 October 2023 |
| | | | | US | 2023-0262709 | A1 | 17 August 2023 |
| | | | | WO | 2022-206931 | A1 | 06 October 2022 |
| KR | 10-2019-0104414 | A | 09 September 2019 | CN | 110383721 | A | 25 October 2019 |
| | | | | CN | 110383721 | B | 26 October 2021 |
| | | | | EP | 3576321 | A1 | 04 December 2019 |
| | | | | EP | 3576321 | B1 | 05 May 2021 |
| | | | | JP | 2020-511070 | A | 09 April 2020 |
| | | | | JP | 6972155 | B2 | 24 November 2021 |
| | | | | KR | 10-2279099 | B1 | 19 July 2021 |
| | | | | US | 11101902 | B2 | 24 August 2021 |
| | | | | US | 2020-0067610 | A1 | 27 February 2020 |
| | | | | WO | 2018-160048 | A1 | 07 September 2018 |
| KR | 10-1660941 | B1 | 28 September 2016 | CN | 101939941 | A | 05 January 2011 |
| | | | | CN | 101939941 | B | 23 July 2014 |
| | | | | EP | 2088709 | A2 | 12 August 2009 |
| | | | | EP | 2088709 | A3 | 19 March 2014 |
| | | | | EP | 2088709 | B1 | 07 March 2018 |
| | | | | ES | 2671018 | T3 | 04 June 2018 |
| | | | | HU | E038686 | T2 | 28 November 2018 |
| | | | | JP | 2011-514732 | A | 06 May 2011 |
| | | | | JP | 2013-132080 | A | 04 July 2013 |
| | | | | JP | 5231578 | B2 | 10 July 2013 |
| | | | | JP | 5576524 | B2 | 20 August 2014 |
| | | | | KR | 10-2010-0116210 | A | 29 October 2010 |
| | | | | US | 2009-0201863 | A1 | 13 August 2009 |
| | | | | US | 8116271 | B2 | 14 February 2012 |
| | | | | WO | 2009-099306 | A1 | 13 August 2009 |

Form PCT/ISA/210 (patent family annex) (July 2022)